# DEMANDE DE BREVET EUROPEEN

(11) **EP 0 700 054 A1**
(43) Date de publication de la demande: **06.03.1996**
(21) Numéro de dépôt: 95401970.9
(22) Date de dépôt: 29.08.1995
(51) Int. Cl.: G21C 3/334

(54) **Outil de manoeuvre pour un dispositif de verrouillage d'un embout supérieur d'un assemblage de combustible nucléaire**

(30) Priorité: 31.08.1994 US 298813
(71) Demandeur: B & W FUEL COMPANY, Lynchburg, VA 24506-0935 (US)
(72) Inventeur: Clark, darel R., VA 24502 (US); Clark, darel R., VA 24502 (US)
(74) Mandataire: Bouget, Lucien

(57) **Abrégé**

L'outil (10) est destiné à être utilisé pour la manoeuvre d'un ensemble de verrouillage réutilisable entre les tubes-guides et l'embout supérieur d'un assemblage de combustible nucléaire. Un positionneur (16) permet de mettre l'outil en position sur l'embout supérieur et d'aligner une clé (14) de l'outil (10) avec des parties en saillie d'un collier à ressorts de l'ensemble de verrouillage. La clé (14) à la partie inférieure de l'outil présente des fentes (28) qui s'engagent sur l'ensemble de verrouillage, lorsqu'on applique une force de pression vers le bas sur le tournevis (12) de l'outil (10). La rotation du tournevis (12) provoque une rotation correspondante du collier à ressorts pour verrouiller ou déverrouiller l'embout supérieur en place par rapport au tube-guide. Le déplacement axial et en rotation du tournevis (12) est limité par l'interaction entre une vis de guidage (34) sur le positionneur (16) et des fentes du tournevis (12).

## Description

L'invention concerne de manière générale les assemblages de combustible nucléaire et plus particulièrement un outil pour l'utilisation d'une fixation démontable rapide entre un tube-guide et l'embout supérieur d'un assemblage de combustible.

Dans le coeur d'un réacteur nucléaire, chacun des assemblages de combustible est équipé d'un certain nombre de tubes-guides qui sont utilisés pour recevoir des barres de commande. Dans l'industrie nucléaire, les tubes qui sont utilisés pour recevoir des barres de commande sont désignés comme tubes-guides ou tubes de guidage et la structure interne supérieure à laquelle ces tubes sont fixés est désignée comme pièce de fermeture supérieure ou embout supérieur, suivant la désignation du fabricant. En conséquence, on devra comprendre que par la suite, toute référence à un tube-guide ou à une pièce de fermeture supérieure pourra être considérée comme se référant également à un tube de guidage et à un embout.

Les tubes-guides ont une épaisseur de paroi relativement faible et de ce fait nécessitent l'utilisation d'un manchon à leur extrémité supérieure pour fournir un support suffisant en des points de fixation et pour des épaulements de butée. Lors de la fabrication de l'assemblage, les tubes-guides sont introduits à l'intérieur des grilles-entretoises. L'embout supérieur est ensuite aligné, engagé et fixé sur les manchons d'extrémité supérieurs des tubes-guides. Suivant un mode de réalisation caractéristique, les embouts supérieurs et les manchons sont fixés l'un à l'autre en utilisant des liaisons vissées et des coupelles de verrouillage. Quand il devient nécessaire de démonter un embout supérieur d'un assemblage de combustible irradié sur le site du réacteur, l'opération doit être effectuée avec un outillage commandé à distance sous eau. Il en résulte la manutention d'un certain nombre de pièces et la possibilité d'effectuer des vissages avec interversion des pièces de fixation pendant le remontage. La manutention à distance d'un certain nombre de pièces sous eau accroît les possibilités de formation de corps migrants dans l'installation qui peuvent endommager le réacteur et accroître également la durée nécessaire pour effectuer l'opération. Les brevets concernant les dispositifs de retenue des embouts d'assemblages de combustible qui sont parvenus à la connaissance du demandeur de brevet comportent les brevets suivants :

Le brevet américain n° 3.769.158 décrit l'utilisation d'un embout d'extrémité au-dessus de crayons de combustible dans lequel un col de diamètre réduit s'étendant à travers l'ouverture de l'embout présente des anneaux fendus élastiques dans des gorges et est engagé dans l'embout.

Le brevet américain 3.828.868 décrit des tubes-guides qui sont fixés par vissage sur l'embout d'extrémité.

Le brevet américain 4.699.761 décrit l'utilisation d'un manchon fileté à la partie supérieure du tube-guide.

Le brevet américain 5.268.948 décrit un assemblage de verrouillage pour verrouiller et maintenir en position une plaque de support supérieure au-dessus d'un faisceau de combustible nucléaire.

L'invention est destinée à répondre aux besoins mentionnés ci-dessus. On propose un outil destiné à être utilisé avec un ensemble réutilisable de verrouillage entre les tubes-guides et l'embout supérieur d'un assemblage de combustible nucléaire. Un positionneur sur l'outil met en place l'outil sur le réseau de l'embout supérieur et aligne une clé de l'outil avec des parties en saillie sur un collier à ressorts utilisé dans le dispositif de verrouillage. La clé à la partie inférieure de l'outil présente des fentes qui coopèrent avec l'ensemble de verrouillage réutilisable sur le tube-guide par application d'une force de pression dirigée vers le bas sur le tournevis de l'outil. Une rotation du tournevis entraîne une rotation correspondante du collier à ressorts sur le dispositif de verrouillage réutilisable pour verrouiller ou déverrouiller l'embout supérieur en place sur les tubes-guides. Un mouvement vers le haut du tournevis permet de séparer la clé du collier à ressorts pour enlever l'outil.

L'outil de manoeuvre suivant l'invention comporte :
(a) un tournevis constitué par un arbre ayant une première partie d'extrémité ayant un diamètre plus important que la partie restante de l'arbre et une seconde extrémité en pointe, ledit tournevis ayant une encoche radiale et une pluralité de fentes axiales en communication avec l'encoche radiale à une distance choisie de l'extrémité en pointe ;
(b) un positionneur monté rotatif et glissant sur ledit tournevis au niveau de l'encoche radiale et des fentes axiales ;
(c) une vis de guidage qui s'étend à travers ledit positionneur et qui peut être engagée dans l'encoche radiale et les fentes axiales dudit tournevis de telle sorte que ledit tournevis soit mobile par rapport audit positionneur entre une première position normale dans laquelle ladite vis de guidage est située à l'extrémité de l'une des fentes axiales distantes de l'encoche radiale et une seconde position opérationnelle dans laquelle ladite vis de guidage est située dans l'encoche radiale ;
(d) un ressort engagé sur ledit tournevis entre ledit positionneur et la première partie à diamètre élargi dudit tournevis de telle sorte que ledit ressort rappelle de manière élastique ledit tournevis vers ladite première position normale ; et
(e) une clé engagée et fixée sur ledit tournevis entre ledit positionneur et l'extrémité en pointe dudit tournevis, ladite clé ayant une extrémité pourvue de fentes espacées régulièrement suivant la circonférence.

Afin de faire mieux comprendre la nature et les objectifs de la présente invention, on va se référer à la description suivante en relation avec les dessins annexés dans lesquels on attribue des références identiques à des pièces identiques et dans lesquels :
- la figure 1 est une vue latérale de l'outil suivant l'invention ;
- la figure 2 est une vue latérale de la clé de l'outil ;
- la figure 3 est une vue suivant 3 de la figure 1 ;
- la figure 4 est une vue de détail d'un tronçon de l'arbre de manoeuvre de l'outil suivant l'invention qui montre les moyens pour assurer le contrôle du déplacement de l'arbre de manoeuvre ;
- la figure 5 est une vue de détail du tronçon de l'arbre de manoeuvre représenté à la figure 4 lorsqu'on exerce une force dirigée vers le bas et qu'on fait tourner le tournevis ; et
- la figure 6 est une vue en plan d'un embout supérieur en place au-dessus des tubes-guides avec les ensembles de verrouillage réutilisables en place.

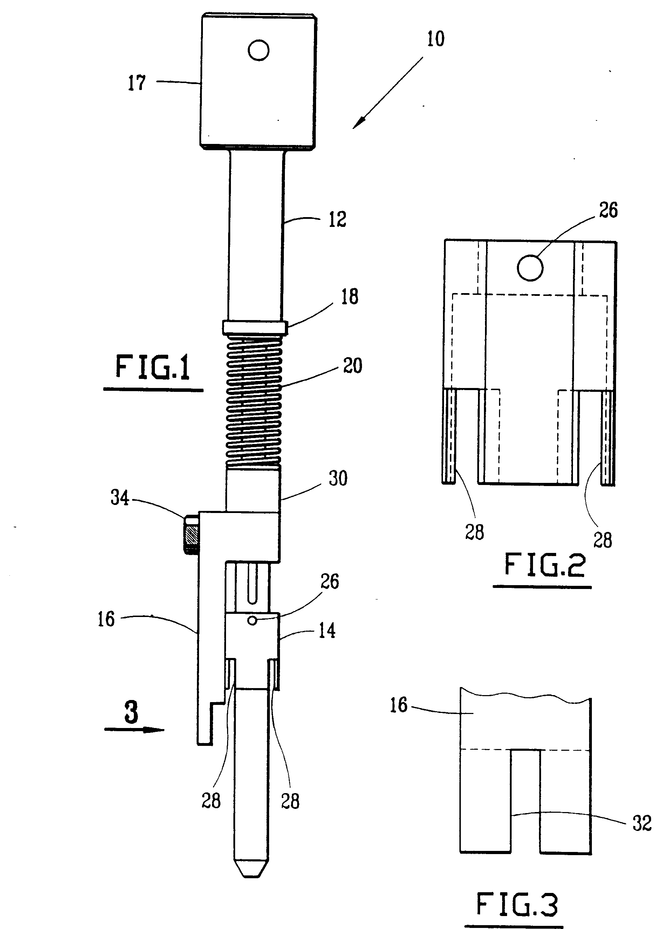

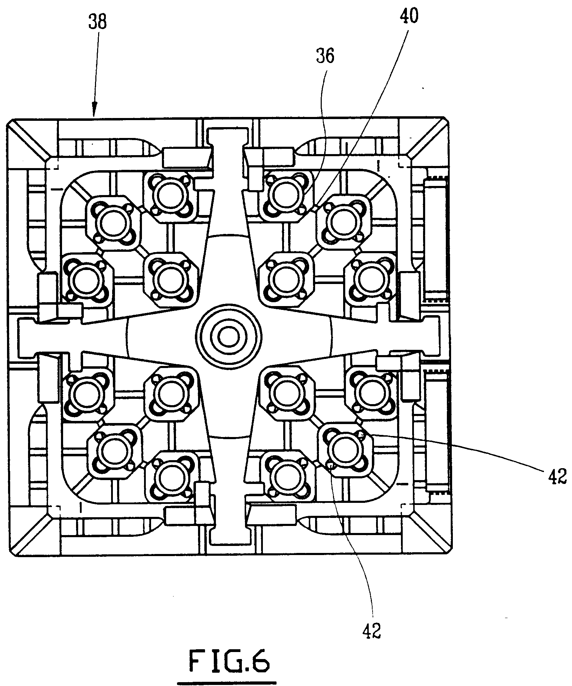

En se référant aux figures, on voit sur la figure 1 que l'invention est généralement désignée par le repère 10. L'invention est relative à un outil de manoeuvre destiné à venir en prise avec le dispositif de verrouillage entre les tubes-guides et l'embout supérieur représenté sur la figure 6 et à le manoeuvrer. L'outil de manoeuvre 10 comporte généralement un tournevis 12, une clé 14 et un positionneur 16.

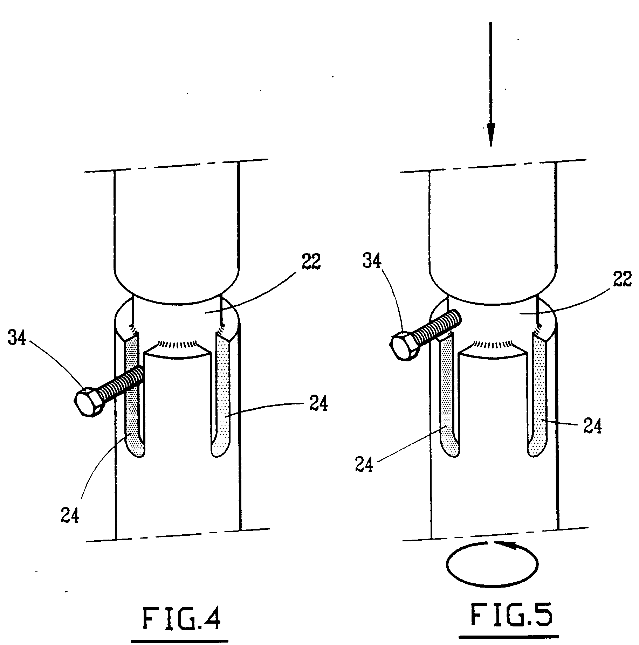

Le tournevis 12 est constitué d'un arbre ayant une première extrémité qui présente un diamètre plus important que la partie restante de l'arbre. Une tête de manoeuvre 17 est engagée sur la première extrémité du tournevis 12 pour fournir un point de fixation pour des prolongateurs de l'outil. La transition vers la partie à plus faible diamètre forme un épaulement sur lequel s'adapte une rondelle de poussée 18 enfilée sur l'arbre par une seconde extrémité. La rondelle de poussée 18 coopère au maintien d'un ressort 20 dans sa position de montage sur la partie à plus faible diamètre de l'arbre. Une encoche radiale et des fentes axiales en communication avec l'encoche radiale sont prévues à une certaine distance de l'extrémité en pointe de l'arbre. L'encoche radiale 22 qui est rendue plus visible sur les figures 4 et 5 est constituée par un tronçon à diamètre réduit. Quatre fentes axiales 24 sont réalisées à partir de l'encoche radiale 22 sur une certaine longueur en direction de la seconde extrémité en pointe de l'arbre. Les encoches axiales 24 sont espacées de 90° l'une de l'autre autour de la circonférence de l'arbre.

La clé 14 représentée sur les figures 1 et 2 est fixée à l'arbre d'une manière convenable, par exemple par une goupille cylindrique 26 qui est introduite dans une ouverture à travers l'arbre et la clé 14. Il en résulte une rotation en commun de la clé 14 et du tournevis 12. La clé 14 est pourvue de fentes à sa partie inférieure au nombre de quatre dans le mode de réalisation préférentiel qui sont espacées l'une de l'autre à distance régulière suivant la circonférence de la clé. Les fentes 28 sont dimensionnées de manière à coopérer avec le collier de l'ensemble de verrouillage sur les tubes-guides et l'embout supérieur représenté sur la figure 6 et leur rôle sera expliqué par la suite.

Le positionneur 16 représenté sur les figures 1 et 3 est fixé au tournevis 12 au niveau de l'encoche radiale 22 et des fentes axiales 24 pour mettre en place la clé 14 et pour permettre un déplacement dans la direction axiale et en rotation du tournevis 12 par rapport au positionneur 16 lorsque celui-ci est en position sur l'embout supérieur. L'extrémité supérieure du positionneur 16 est pourvue d'une ouverture circulaire dimensionnée de manière à s'engager de manière glissante et rotative sur l'arbre du tournevis 12. Une bague 30 est engagée sur l'arbre entre le positionneur 16 et le ressort 20. La partie inférieure du positionneur 16 représentée sur la figure 3 est pourvue d'une fente 32 dont le but sera expliqué ci-dessous. Une vis de guidage 34 est vissée à travers le positionneur 16 de manière à être engagée de manière glissante dans l'encoche radiale 22 et chacune des fentes axiales 24 suivant la position du tournevis 12 comme représenté sur les figures 4 et 5. Ceci permet de réaliser le déplacement du tournevis par rapport audit positionneur 16 entre une première position normale dans laquelle la vis de guidage 34 est située à l'extrémité de l'une des fentes axiales 24 éloignée de l'encoche 22 et une seconde position de service dans laquelle la vis de guidage 34 est située dans l'encoche radiale 22 pour permettre la rotation du tournevis 12.

En service, l'extrémité en pointe du tournevis 12 est introduite dans le collier 36 de démontage rapide représenté sur la figure 6 sur l'embout supérieur 38. L'outil de manoeuvre 10 est abaissé jusqu'à ce que la fente 32 du positionneur 16 soit en appui sur l'une des nervures 40 du réseau et permette d'aligner les fentes 28 de la clé 14 avec les parties en saillie 42 du collier à démontage rapide 36. Le tournevis 12 est dans sa première position normale à ce moment. La pression vers le bas à l'encontre du ressort 20 produit un déplacement du tournevis 12 vers sa seconde position de service et provoque l'engagement de la clé 14 sur les parties en saillie 42. Les figures 4 et 5 montrent le fonctionnement de la vis de guidage 34 pendant le mouvement vers le bas du tournevis 12. Les fentes axiales 24 coopèrent avec la vis de guidage 34 pour empêcher la rotation du tournevis 12 jusqu'à ce qu'il se soit déplacé vers le bas suffisamment pour que la vis de guidage 34 soit parvenue dans l'encoche radiale 22, ce qui permet alors la mise en rotation du tournevis 12. Le tournevis 12 est alors mis en rotation de 90° pour déverrouiller le collier à démontage rapide 36 par rapport à l'embout supérieur 38. Le ressort 20 repousse le tournevis 12 vers le bas vers sa première position normale après une rotation de 90° à moins que la pression vers le bas ne soit maintenue. Ceci procure un moyen assurant une indication positive à l'opérateur que l'outil de manoeuvre a été utilisé correctement pour déverrouiller ou verrouiller le collier 36 de démontage rapide par rapport à l'embout supérieur 38. On notera que la figure 6 montre tous les colliers de démontage rapide 36 dans leur position verrouillée et que l'outil de manoeuvre 10 peut être utilisé de manière sélective pour mettre en rotation les colliers 36 de démontage rapide entre leurs positions verrouillée et déverrouillée dans un sens ou dans l'autre, sur l'embout supérieur 38. Ceci élimine le besoin d'utiliser des outils séparés pour réaliser le verrouillage ou le déverrouillage de l'embout supérieur 38 en position comme dans le cas de l'art antérieur. L'interaction entre la vis de guidage 34, les fentes 24 et l'encoche 22 sert à empêcher une rotation non souhaitée du tournevis 12 lorsqu'il se trouve dans sa première position normale et à favoriser l'obtention d'une rotation positive de 90° pendant le fonctionnement.

## Revendications

**1.-** Outil de manoeuvre pour un dispositif de verrouillage d'un embout supérieur (38) d'un assemblage de combustible nucléaire, caractérisé en ce qu'il comporte :
(a) un tournevis (12) constitué par un arbre ayant une première partie d'extrémité ayant un diamètre plus important que la partie restante de l'arbre et une seconde extrémité en pointe, ledit tournevis (12) ayant une encoche radiale (22) et une pluralité de fentes axiales (24) en communication avec l'encoche radiale (22) à une distance choisie de l'extrémité en pointe ;
(b) un positionneur (16) monté rotatif et glissant sur ledit tournevis (12) au niveau de l'encoche radiale (22) et des fentes axiales (24) ;
(c) une vis de guidage (34) qui s'étend à travers ledit positionneur (16) et qui peut être engagée dans l'encoche radiale (22) et les fentes axiales (24) dudit tournevis (12) de telle sorte que ledit tournevis (12) soit mobile par rapport audit positionneur (16) entre une première position normale dans laquelle ladite vis de guidage (34) est située à l'extrémité de l'une des fentes axiales (24) distante de l'encoche radiale (22) et une seconde position opérationnelle dans laquelle ladite vis de guidage (34) est située dans l'encoche radiale (22) ;
(d) un ressort (20) engagé sur ledit tournevis (12) entre ledit positionneur (16) et la première partie à diamètre élargi dudit tournevis (12) de telle sorte que ledit ressort (20) rappelle de manière élastique ledit tournevis (12) vers ladite première position normale ; et
(e) une clé (14) engagée et fixée sur ledit tournevis (12) entre ledit positionneur (16) et l'extrémité en pointe dudit tournevis (12), ladite clé ayant une extrémité pourvue de fentes espacées (28) régulièrement suivant sa circonférence.

**2.-** Outil de manoeuvre suivant la revendication 1 comportant de plus une tête de manoeuvre (17) fixée à l'extrémité à plus grand diamètre dudit tournevis (12).
